# EUROPÄISCHE PATENTANMELDUNG

(11) **EP 4 518 136 A1**
(43) Veröffentlichungstag der Anmeldung: **05.03.2025**
(21) Anmeldenummer: 24192553.6
(22) Anmeldetag: 02.08.2024
(51) Int. Cl.: H02M 7/48, H02M 7/12, H02M 3/00, H02M 1/32, H02M 1/36, H02M 1/00

(54) **RESONANTER DC-STELLER UND VERFAHREN ZUM BETREIBEN EINES RESONANTEN DC-STELLERS**

(30) Priorität: 30.08.2023 DE 102023208316
(71) Anmelder: Siemens Aktiengesellschaft, 80333 München (DE)
(72) Erfinder: Doht, Hans-Christian, 91052 Erlangen (DE); Leonhardt, Jörg, 76646 Bruchsal (DE); Melkonyan, Ashot, 81549 München (DE); Nielebock, Sebastian, 91301 Forchheim (DE)
(74) Vertreter: Siemens Patent Attorneys

(57) **Zusammenfassung**

Die Erfindung betrifft einen resonanten DC-Steller (1) und ein Verfahren zum Betreiben eines resonanten DC-Stellers (1). Der DC-Steller (1) ist mit einem Versorgungseingang (2) für eine Versorgungsspannung, einem Gleichspannungsausgang (6) für das Bereitstellen einer Gleichspannung, einem eingangsseitig mit dem Versorgungseingang (2) verbundenen Pulsgenerator (3), einem eingangsseitig mit Ausgängen des Pulsgenerators (3) und ausgangsseitig mit dem Gleichspannungsausgang (6) verbundenen Resonanzkonverter (4), einem zwischen einen Pluspol (7) des Gleichspannungsausgangs (6) und einen Minuspol (8) des Gleichspannungsausgangs (6) verbundenen Ausgangskondensator (5) und einer Steuereinheit (9) ausgestattet. Der Pulsgenerator (3) ist dabei dazu ausgebildet, mit einer von der Steuereinheit (9) veränderlich vorgebbaren Pulsfrequenz (f) Pulse zu erzeugen und an den Resonanzkonverter (4) auszugeben. Der Resonanzkonverter (4) weist eine Mehrzahl N von Resonanztank (10, 10-1, 10-2, 10-3, ..., 10-N) mit einer Resonanzfrequenz auf. Erfindungsgemäß ist die Steuereinheit (9) dazu ausgebildet, während einer Initialisierungszeitspanne (19) des DC-Stellers (1) dem Pulsgenerator (3) eine erste Pulsfrequenz (f₁) vorzugeben und während einer auf die Initialisierungszeitspanne (19) folgenden Dauerbetriebszeitspanne (20) des DC-Stellers (1) dem Pulsgenerator (3) eine von der ersten Pulsfrequenz (f₁) verschiedene zweite Pulsfrequenz (f₂) vorzugeben. Die zweite Pulsfrequenz (f₂) entspricht dabei einem N-fachen der Resonanzfrequenz. Das erfindungsgemäße Verfahren beschreibt den DC-Steller (1) in seinem erfindungsgemäßen Betrieb.

## Beschreibung

### Technisches Gebiet

Die Erfindung betrifft einen resonanten DC-Steller und ein Verfahren zum Betreiben eines resonanten DC-Stellers.

### Technischer Hintergrund

DC-Steller werden verwendet, um aus einer Versorgungsspannung eine einstellbare DC-Spannung zu erzeugen. Als Versorgungsspannung kann gleichermaßen eine Wechsel- oder eine Gleichspannung verwendet werden, wobei man im ersten Fall häufig von einem AC/DC-Umsetzer und im zweiten Fall von einem DC/DC-Umsetzer spricht.

Dabei werden allgemein ein möglichst hoher Wirkungsgrad beziehungsweise möglichst geringe Verluste bei der Konvertierung angestrebt. Ein DC-Steller kann beispielsweise dazu verwendet werden, eine Batterie aufzuladen, wobei die von dem DC-Steller erzeugte DC-Spannung an einen jeweiligen Ladestand der Batterie und damit an eine mit dem Ladestand veränderliche Leerlaufspannung der Batterie angepasst wird. Für das Laden von Traktionsbatterien von Elektrofahrzeugen ist zudem eine galvanische Trennung vorgeschrieben, so dass sich resonante DC-Steller mit einem Hochfrequenztransformator als eine bekannte Klasse von DC-Stellern für solche Einsatzzwecke anbieten. Soll die Eigenschaft der galvanischen Trennung kenntlich gemacht werden, werden die oben erklärten Bezeichnungen leicht abgewandelt als AC//DC- beziehungsweise DC//DC-Umsetzer geschrieben. Die nachfolgend beschriebenen DC-Steller können gleichermaßen aus einer Wechsel- oder Gleichspannung als Versorgungsspannung betrieben werden.

Kern eines resonanten DC-Stellers stellt ein Resonanzkonverter dar, der eingangsseitig wenigstens einen Resonanztank besitzt, der durch Strom- oder Spannungspulse zum Schwingen mit einer Resonanzfrequenz angeregt werden kann. Die Resonanzfrequenz ergibt sich dabei aus der Dimensionierung der Schaltung und deren parasitären Kapazitäten und Induktivitäten. Die vom Resonanztank erzeugte Schwingung wird über eine Primärwicklung eines Hochfrequenztransformators auf dessen Sekundärseite übertragen, wo die übertragene Energie gleichgerichtet und in einem Ausgangskondensator gepuffert wird. Die Spannung über den Ausgangskondensator stellt dann die vom DC-Steller erzeugte Gleichspannung dar. Allgemein sollen in diesem Dokument auch Serien- und Parallelschaltungen von Kondensatoren, die als Pufferkondensator am Ausgang eines DC-Stellers eingesetzt werden, als "Ausgangskondensator" (Singular) verstanden werden, obgleich es sich in solchen Fällen um mehrere Kondensatoren handelt.

Bei resonanten DC-Stellern ist beim Einschalten keine Energie im DC-Steller oder genauer in den darin verbauten Induktivitäten (Resonanztank, Transformator, Netzfilter) und Kondensatoren (Resonanztank, Ausgangskondensator) gespeichert. Dadurch ergeben sich hohe Einschaltströme, die zu einer Zerstörung der verwendeten Halbleiterbauelemente führen können. Aufgrund von parasitären Induktivitäten kommt es dabei außerdem zu einem Schwingen im DC-Steller, was an manchen der im DC-Steller verbauten Transistoren hohe Sperrspannungen verursachen kann, die beim Doppelten der im Dauerbetrieb auftretenden Spannungen und mehr liegen können. Dementsprechend ist es erforderlich, Transistoren mit ausreichend hohen Durchbruchspannungen zu wählen, was höhere Kosten und höhere Verlustleistungen bei der Ansteuerung der Transistoren mit sich bringt. Ebenso müssen alle anderen Komponenten eine entsprechend höhere Spannungsfestigkeit aufweisen.

Vor diesem Hintergrund macht es sich die Erfindung zur Aufgabe, einen verbesserten DC-Steller und ein verbessertes Verfahren zum Betreiben eines DC-Stellers bereitzustellen.

### Zusammenfassung der Erfindung

Ein erster Aspekt der Erfindung führt daher einen DC-Steller mit einem Versorgungseingang für eine Versorgungsspannung, einem Gleichspannungsausgang für das Bereitstellen einer Gleichspannung, einem eingangsseitig mit dem Versorgungseingang verbundenen Pulsgenerator, einem eingangsseitig mit Ausgängen des Pulsgenerators und ausgangsseitig mit dem Gleichspannungsausgang verbundenen Resonanzkonverter, einem zwischen einen Pluspol des Gleichspannungsausgangs und einen Minuspol des Gleichspannungsausgangs verbundenen Ausgangskondensator und einer Steuereinheit ein. Der Pulsgenerator ist dabei dazu ausgebildet, mit einer von der Steuereinheit veränderlich vorgebbaren Pulsfrequenz Pulse zu erzeugen und an den Resonanzkonverter auszugeben. Der Resonanzkonverter weist eine Mehrzahl N von Resonanztanks mit einer Resonanzfrequenz auf. Erfindungsgemäß ist die Steuereinheit dazu ausgebildet, während einer Initialisierungszeitspanne des DC-Stellers dem Pulsgenerator eine erste Pulsfrequenz vorzugeben und während einer auf die Initialisierungszeitspanne folgenden Dauerbetriebszeitspanne des DC-Stellers dem Pulsgenerator eine von der ersten Pulsfrequenz verschiedene zweite Pulsfrequenz vorzugeben. Die zweite Pulsfrequenz entspricht dabei einem N-fachen der Resonanzfrequenz.

Die Erfindung beruht auf der Einsicht und schließt diese mit ein, dass ein Resonanzkonverter einen guten Wirkungsgrad nur bei Betrieb bei der Resonanzfrequenz der Resonanztanks besitzt. Wird der Resonanzkonverter hingegen mit Pulsen einer von der Resonanzfrequenz abweichenden Pulsfrequenz angeregt, sinkt der Wirkungsgrad stark ab. Die Erfinder haben erkannt, dass der reduzierte Wirkungsgrad steigende Verlustleistung innerhalb des DC-Stellers bedeutet, was allgemein im technischen Gebiet als unbedingt zu vermeiden betrachtet wird. Im Gegensatz hierzu haben die Erfinder jedoch erkannt, dass durch Veränderung der Pulsfrequenz weg von der Resonanzfrequenz des Resonanzkonverters die Eingangsimpedanz des DC-Stellers erhöht wird, so dass ein Überschreiten der nominellen Betriebsstromstärke beim Einschalten des DC-Stellers vermieden oder wenigstens stark vermindert werden kann. Dementsprechend sieht die Erfindung vor, in der Initialisierungszeitspanne den Resonanzkonverter mit einer von dessen Resonanzfrequenz verschiedenen Pulsfrequenz anzuregen. Die hierbei in den Resonanzkonverter und den Ausgangskondensator fließenden Ströme lassen sich auf diese Weise auf im Dauerbetrieb übliche Größen beschränken, wodurch die Erfindung nicht nur auf einfache Weise den stabilen Betrieb des DC-Stellers nach dem Einschalten ermöglicht, sondern auch Mehrkosten für Transistoren mit höherer Stromtragfähigkeit vermeidet.

Besonders bevorzugt ist die erste Pulsfrequenz größer als die zweite Pulsfrequenz. Obgleich auch der Betrieb des Resonanzkonverters unterhalb seiner Resonanzfrequenz eine erhöhte Impedanz und damit die gewünschte Begrenzung der Einschaltströme zur Folge hat, sind während der Initialisierungszeitspanne erhöhte Pulsfrequenzen bevorzugt, da sie kürzere Einschaltphasen der Transistoren zur Folge haben, was die thermische Belastung der Transistoren begrenzt.

Vorzugsweise unterscheiden sich die erste Pulsfrequenz und die zweite Pulsfrequenz um wenigstens 30 Prozent voneinander, beispielsweise kann die eine Pulsfrequenz wenigstens das Anderthalbfache, wenigstens das Doppelte oder sogar wenigstens das Dreifache der anderen Pulsfrequenz betragen. Dabei wird der Effekt der Begrenzung immer größer, je weiter die erste Pulsfrequenz von der zweiten Pulsfrequenz entfernt liegt. Allerdings soll die Initialisierungszeitspanne von kurzer Dauer sein, weil während des Betriebs des Resonanzkonverters abseits seiner Resonanzfrequenz erhöhte Verlustleistung in dessen Schaltelementen anfällt und die Schaltelemente andernfalls überhitzen können. Aus diesem Grund sollen die Einschaltströme, die die verschiedenen Induktivitäten und Kapazitäten in der Schaltung aufladen, auch nicht zu stark begrenzt werden, weil dies die Initialisierungszeitspanne unnötig verlängern würde. Im besten Fall sind die Einschaltströme und Sperrspannungen an nichtleitenden Transistoren ungefähr so groß wie die im Dauerbetrieb an entsprechender Stelle auftretenden Ströme und Spannungen.

Die Resonanzfrequenz kann beispielsweise zwischen 20 und 70 Kilohertz betragen. In diesem Frequenzbereich zeigen Resonanzkonverter gute Wirkungsgrade bei gleichzeitig vertretbaren Kosten für die verwendeten Halbleiterbauelemente und den Hochfrequenztransformator.

Vorzugsweise dauert die Initialisierungszeitspanne weniger als 120 Mikrosekunden. Alternativ oder zusätzlich dauert die Initialisierungszeitspanne bevorzugt wenigstens 30 Mikrosekunden. In einer derartigen Zeitspanne können die Induktivitäten und Kapazitäten des DC-Stellers ausreichend aufgeladen werden, ohne die Einschaltströme und Sperrspannungen zu groß werden zu lassen. Die Initialisierungszeitspanne soll aber auch nicht zu lang werden, da andernfalls die thermische Belastung der während der Initialisierungszeitspanne nicht strom- oder spannungsfrei geschalteten Transistoren zu groß wird (siehe auch oben).

Die Steuereinheit kann zusätzlich dazu ausgebildet sein, während einer zwischen der Initialisierungszeitspanne und der Dauerbetriebszeitspanne liegenden Überleitungszeitspanne eine zeitlich veränderliche dritte Pulsfrequenz vorzugeben, die zu Beginn der Überleitungszeitspanne der ersten Pulsfrequenz entspricht und zum Ende der Überleitungszeitspanne der zweiten Pulsfrequenz entspricht, und dabei eine Differenzfrequenz zwischen der dritten Pulsfrequenz und der zweiten Pulsfrequenz über die Überleitungszeitspanne hinweg zu verringern. Die Verringerung der Differenzfrequenz kann insbesondere kontinuierlich oder schrittweise erfolgen. Indem die Pulsfrequenz zwischen der Initialisierungszeitspanne und der Dauerbetriebszeitspanne nicht unmittelbar von der ersten auf die zweite Pulsfrequenz umgeschaltet wird, kann sich ein verbessertes Verhalten hinsichtlich regelungstechnischer Aspekte der Schaltung sowie hinsichtlich der elektromagnetischen Abstrahlung und Rückwirkung ergeben.

Bei bevorzugten Ausführungsformen des erfindungsgemäßen DC-Stellers weist der Pulsgenerators SiC-MOSFET-Transistoren (Siliziumcarbid-Metal-Oxide-Semiconductor Field-Effect-Transistoren) oder GaN-Transistoren (Galliumnitrid-Transistoren) auf. Der Pulsgenerator muss die größten Anforderungen hinsichtlich Schaltfrequenz und Flankensteilheit der geschalteten Pulse befriedigen, so dass mit SiC-MOSFETs oder GaN-Transistoren die besten Ergebnisse erreicht werden.

Der Resonanzkonverter kann hingegen kostengünstigere IGBTs (Insulated Gate Bipolar Transistoren) verwenden, weil sich die vom Pulsgenerator erzeugten Pulse aufgrund der Ausführung des Resonanzkonverters mit N Resonanztanks auf die parallelen Pfade des Resonanzkonverters verteilen, so dass die hier eingesetzten Schaltelemente bei der Resonanzfrequenz oder in der Nähe der Resonanzfrequenz betrieben werden, was um den Faktor N geringere Anforderungen an die Schaltgeschwindigkeit bedeutet.

Der Kompromiss aus schnellen, aber kostenintensiven Transistoren (SiC-MOSFETs oder GaN-Transistoren) im Pulsgenerator einerseits und kostengünstigen, aber langsamen IGBTs im Resonanzkonverter andererseits ist somit besonders vorteilhaft. Hierbei ist es vorteilhaft, wenn die Steuereinheit zusätzlich dazu ausgebildet ist, die Transistoren des Resonanzkonverters zu schalten, da auf diese Weise erreicht werden kann, dass die Schaltelemente von Pulsgenerator und Resonanzkonverter zueinander synchronisiert geschaltet werden. Dadurch wird es möglich, die Schaltelemente des Resonanzkonverters zu Zeitpunkten zu schalten, in denen diese wenigstens näherungsweise strom- und/oder spannungslos sind, was die in den Schaltelementen anfallende Verlustleistung reduziert und somit einen besseren Wirkungsgrad der Vorrichtung bedingt.

Besonders bevorzugt ist der Pulsgenerator zwischenkreislos, also ohne Zwischenkreiskondensator, ausgebildet. Beispiele für derartige Schaltungen sind der Internationalen Patentanmeldung WO 2023/006949 A1 zu entnehmen. Die Erfindung ist besonders für Schaltungen dieser Art geeignet, da durch den Wegfall des Zwischenkreiskondensators, der regelungstechnisch eine verhältnismäßig große Trägheit und damit Dämpfung darstellt, die Herausforderung, zuverlässig vom Einschaltzustand in den stabilen Dauerbetrieb überzugehen, besonders groß ist.

Besonders bevorzugt weist der Resonanzkonverter einen N-phasigen Hochfrequenztransformator auf, der N Primärwicklungen besitzt, die jede mit einem jeweiligen der N Resonanztanks verbunden sind. Je mehr Phasen der Hochfrequenztransformator aufweist, desto kleiner werden die Ströme auf jedem der N Pfade, was zu geringeren ohmschen Verlusten führt. Allerdings wird der Aufbau des Hochfrequenztransformators mit steigender Zahl an Phasen komplexer, und Streuinduktivitäten nehmen zu, so dass in der Praxis Hochfrequenztransformatoren mit zwei, drei oder vier Phasen die besten Ergebnisse zeigen.

Ein zweiter Erfindungsaspekt betrifft ein Verfahren zum Betreiben eines DC-Stellers mit einem Versorgungseingang für eine Versorgungsspannung, einem Gleichspannungsausgang für das Bereitstellen einer Gleichspannung, einem eingangsseitig mit dem Versorgungseingang verbundenen Pulsgenerator, einem eingangsseitig mit Ausgängen des Pulsgenerators und ausgangsseitig mit dem Gleichspannungsausgang verbundenen Resonanzkonverter und einem zwischen einen Pluspol des Gleichspannungsausgangs und einen Minuspol des Gleichspannungsausgangs verbundenen Ausgangskondensator, wobei der Pulsgenerator dazu ausgebildet ist, mit einer veränderlichen Pulsfrequenz Pulse zu erzeugen und an den Resonanzkonverter auszugeben, wobei der Resonanzkonverter eine Mehrzahl N von Resonanztanks mit einer Resonanzfrequenz aufweist. Erfindungsgemäß erzeugt der Pulsgenerator während einer Initialisierungszeitspanne des DC-Stellers Pulse mit einer ersten Pulsfrequenz und während einer auf die Initialisierungszeitspanne folgenden Dauerbetriebszeitspanne des DC-Stellers Pulse mit einer von der ersten Pulsfrequenz verschiedenen zweiten Pulsfrequenz. Dabei entspricht die zweite Pulsfrequenz einem N-fachen der Resonanzfrequenz.

Das Verfahren des zweiten Erfindungsaspekts ermöglicht es, einen DC-Steller der hier beschriebenen Art in Betrieb zu nehmen, ohne die dabei auftretenden Einschaltströme zu groß werden zu lassen. Dies wiederum ermöglicht es, kostengünstige Transistoren mit geringerer Stromtragfähigkeit einzusetzen. Zudem werden alle spannungsbelasteten Bauelemente entlastet, so dass kostengünstigere Ausführungen gewählt und/oder Lebensdauervorteile zu erwarten sind.

Besonders bevorzugt ist die erste Pulsfrequenz größer als die zweite Pulsfrequenz, was die oben für die Vorrichtung beschriebenen Vorteile mit sich bringt.

Vorzugsweise unterscheiden sich die erste Pulsfrequenz und die zweite Pulsfrequenz um wenigstens 30 Prozent voneinander beispielsweise kann die eine Pulsfrequenz wenigstens das Anderthalbfache, Doppelte oder sogar Dreifache der anderen Pulsfrequenz betragen. Zu den dadurch erreichten Vorteilen sei erneut auf die Ausführungen zu der erfindungsgemäßen Vorrichtung verwiesen.

Der Pulsgenerator kann während einer zwischen der Initialisierungszeitspanne und der Dauerbetriebszeitspanne liegenden Überleitungszeitspanne Pulse mit einer zeitlich veränderlichen dritten Pulsfrequenz erzeugen, die zu Beginn der Überleitungszeitspanne der ersten Pulsfrequenz entspricht und zum Ende der Überleitungszeitspanne der zweiten Pulsfrequenz entspricht, und dabei eine Differenzfrequenz zwischen der dritten Pulsfrequenz und der zweiten Pulsfrequenz über die Überleitungszeitspanne hinweg verringern. Die Verringerung der Differenzfrequenz kann insbesondere kontinuierlich oder schrittweise erfolgen und hat die oben für die Vorrichtung beschriebenen Vorteile.

### Kurzbeschreibung der Abbildungen

Die Erfindung wird nachfolgend anhand von Abbildungen von Ausführungsbeispielen näher beschrieben. Dabei zeigen:
Fig. 1 ein erstes Ausführungsbeispiel des erfindungsgemä-ßen DC-Stellers in einem Blockdiagramm;
Fig. 2 ein Ausführungsbeispiel eines Resonanzkonverters, wie er im erfindungsgemäßen DC-Steller Verwendung finden kann;
Fig. 3 ein zweites Ausführungsbeispiel eines erfindungsgemäßen DC-Stellers in einem Schaltbild;
Fig. 4 ein erstes Ausführungsbeispiel des erfindungsgemäßen Verfahrens anhand eines ersten Diagramms, in dem die Pulsfrequenz f über der Zeit t aufgetragen ist;
Fig. 5 ein zweites Ausführungsbeispiel des erfindungsgemäßen Verfahrens anhand eines zweiten Diagramms, in dem die Pulsfrequenz f über der Zeit t aufgetragen ist; und
Fig. 6 ein drittes Ausführungsbeispiel des erfindungsgemäßen Verfahrens anhand eines dritten Diagramms, in dem die Pulsfrequenz f über der Zeit t aufgetragen ist.

### Ausführliche Beschreibung der Abbildungen

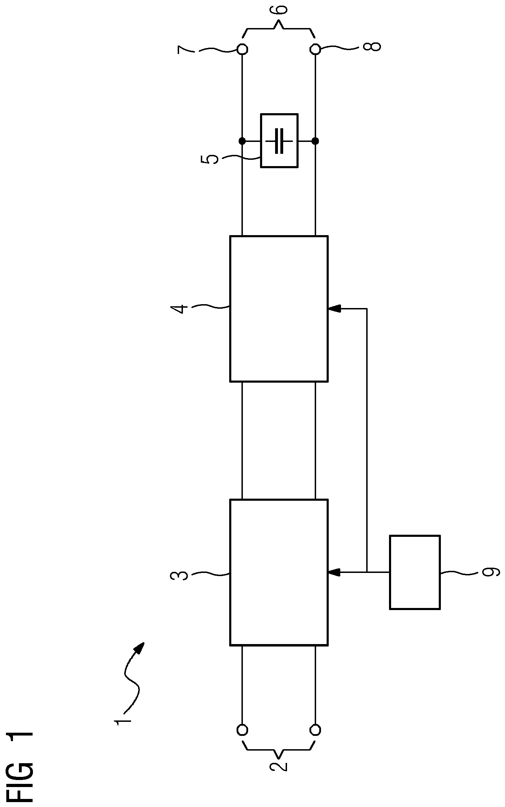

Fig. 1 zeigt ein erstes Ausführungsbeispiel des erfindungsgemäßen DC-Stellers 1 in einem Blockdiagramm. Ein Pulsgenerator 3 ist eingangsseitig mit einem Versorgungseingang 2 verbunden, der vorliegend lediglich beispielhaft als zweipoliger Eingang für eine Gleichspannung oder eine einphasige Wechselspannung ausgebildet ist, aber ohne weiteres auch als mehrphasiger Wechselspannungseingang ausgelegt sein könnte. Über den Versorgungseingang 2 wird dem DC-Steller 1 die elektrische Energie bereitgestellt, die vom DC-Steller 1 in eine Gleichspannung mit einem gewünschten Spannungswert konvertiert und über einen Gleichspannungsausgang 6 ausgegeben wird. Wird am Versorgungseingang 2 eine Gleichspannung zur Verfügung gestellt, handelt es sich bei dem DC-Steller 1 um einen DC//DC-Steller. Wird hingegen am Versorgungseingang 2 eine Wechselspannung zur Verfügung gestellt, handelt es sich bei dem DC-Steller 1 um einen AC//DC-Steller.

Der Pulsgenerator 3 ist dazu vorgesehen, gemäß einer Frequenzvorgabe einer Steuereinheit 9 Pulse zu erzeugen und an einen dem Pulsgenerator 3 nachgeschalteten Resonanzkonverter 4 auszugeben. Der Resonanzkonverter 4 ist im gezeigten Beispiel dreiphasig ausgelegt (N=3), das heißt, er besitzt drei Resonanztanks, die gegeneinander zeitlich versetzt Pulse vom Pulsgenerator 3 erhalten. Es ist auch möglich, den Resonanzkonverter 4 zweiphasig (N=2) oder mit mehr als drei Phasen aufzubauen (N>3).

Der Resonanzkonverter 4 kann nach bekannter Bauart aufgebaut sein. Insofern wird hier auf den bekannten Stand der Technik verwiesen. Die Ausgänge des Resonanzkonverters 4 sind mit dem Gleichspannungsausgang 6 verbunden, zwischen dessen Pluspol 7 und dessen Minuspol 8 ein Ausgangskondensator 5 geschaltet ist. Der Ausgangskondensator 5 dient dazu, die vom Resonanzkonverter 4 erzeugte Gleichspannung zu filtern und für eventuelle Lastschwankungen zu puffern.

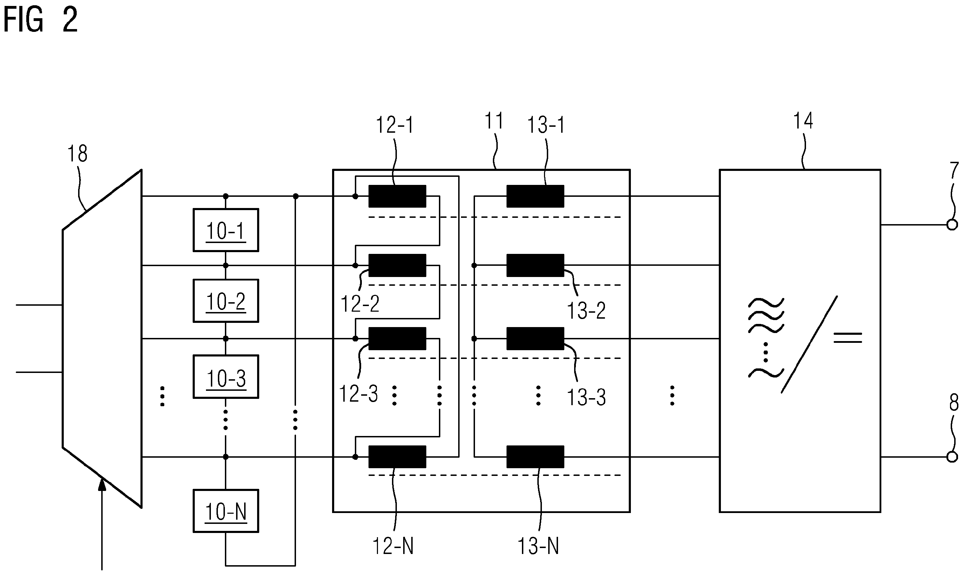

Fig. 2 zeigt ein Ausführungsbeispiel eines Resonanzkonverters 4, wie er im erfindungsgemäßen DC-Steller 1 Verwendung finden kann. Vorliegend ist der Resonanzkonverter 4 N-phasig ausgelegt, wobei N eine Mehrzahl ist. Auch wenn der N-phasige Aufbau in der Abbildung durch vier Schaltungspfade angedeutet ist, ist aber auch einen Aufbau mit zwei, drei oder mehr als vier Phasen möglich. Der Resonanzkonverter 4 ist eingangsseitig mit einer Verteilstufe 18 ausgestattet, deren Aufgabe es ist, die an den Eingängen des Resonanzkonverters 4 anliegenden Pulse reihum auf nachgeschaltete Resonanztanks 10-1, 10-2, 10-3, ..., 10-N zu verteilen, die alle (wenigstens näherungsweise) dieselbe Resonanzfrequenz besitzen. Die Verteilstufe 18 wird vorzugsweise von der Steuereinheit 9 des DC-Stellers 1 gesteuert.

Indem die einzelnen Resonanztanks 10-1, 10-2, 10-3, ..., 10-N durch zeitlich versetzte Pulse angeregt werden, schwingen die Resonanztanks 10-1, 10-2, 10-3, ..., 10-N zueinander phasenversetzt. Bei einem dreiphasigen Aufbau des Resonanzkonverters 4 schwingen die dann drei Resonanztanks also um 120 Grad versetzt, bei einem vierphasigen Aufbau entsprechend um 90 Grad usw. Die Verteilstufe 18 setzt also die Pulsfrequenz der vom Pulsgenerator 3 erzeugten Pulse für die Anregung der Resonanztanks 10-1, 10-2, 10-3, ..., 10-N um einen Faktor herab, der der Anzahl N der Resonanztanks 10-1, 10-2, 10-3, ..., 10-N beziehungsweise der Anzahl N der Phasen des Resonanzkonverters 4 entspricht.

Die Resonanztanks 10-1, 10-2, 10-3, ..., 10-N sind mit einer entsprechenden Anzahl von Primärwicklungen 12-1, 12-2, 12-3, ..., 12-N eines Hochfrequenztransformators 11 verbunden, so dass in den Primärwicklungen 12-1, 12-2, 12-3, ..., 12-N ein Wechselstrom mit einer - bei Resonanzbetrieb - der Resonanzfrequenz entsprechenden Frequenz fließt. Zu diesem Zweck sind die Resonanztanks 10-1, 10-2, 10-3, ..., 10-N vorliegend den Primärwicklungen 12-1, 12-2, 12-3, ..., 12-N parallelgeschaltet. Die Resonanzfrequenz ergibt sich hierbei nicht allein aus den Komponenten des Resonanztanks, sondern wird auch durch die Induktivität des Hochfrequenztransformators 11 beeinflusst. Der in den Primärwicklungen 12-1, 12-2, 12-3, ..., 12-N fließende Strom erzeugt ein Magnetfeld, das wiederum in Sekundärwicklungen 13-1, 13-2, 13-3, ..., 13-N des Hochfrequenztransformators 11 Spannungen induziert.

Der Hochfrequenztransformator 11 bewirkt eine galvanische Trennung und kann zudem auch eine Spannungstransformation bewirken, beispielsweise um Ausgangsspannungen zu erzeugen, die über der am Versorgungseingang anliegenden Spannung liegen. In manchen Ausführungen des erfindungsgemäßen DC-Stellers 1 kann der Hochfrequenztransformator jedoch ein Wicklungsverhältnis von 1 aufweisen. Allgemein sind auch Hochfrequenztransformatoren mit einer von der in Fig. 2 gezeigten abweichenden Konfiguration im Rahmen der Erfindung einsetzbar. So ist in Fig. 2 die Primärseite des Hochfrequenztransformators 11 in einer Dreiecksschaltung verschaltet, während die Sekundärseite in einer Sternschaltung verschaltet ist. Es könnte aber auch primärseitig eine Sternschaltung und/oder sekundärseitig eine Dreiecksschaltung verwendet werden. Allgemein sind hier vielfältige Hochfrequenztransformatortopologien einsetzbar.

Die in den Sekundärwicklungen 13-1, 13-2, 13-3, ..., 13-N induzierten Spannungen werden an einen Gleichrichter 14 ausgegeben, der als aktiver oder passiver Gleichrichter ausgebildet sein kann. Ein aktiver Gleichrichter vermeidet Verluste, die in den in passiven Gleichrichtern eingesetzten Dioden anfallen, indem anstelle der Dioden Transistoren zu geeigneten Zeitpunkten ein- und ausgeschaltet werden. Außerdem ist es mit einem aktiven Gleichrichter möglich, den DC-Steller bidirektional auszulegen, also einen Energietransport auch vom Gleichspannungsausgang 6 zum Versorgungseingang 2 durchzuführen. Aktive Gleichrichter erfordern jedoch zusätzlichen Aufwand bei der Ansteuerung. Zudem entstehen aufgrund der Gate-Kapazitäten der hierbei verwendeten Transistoren wiederum Verluste, die die Einsparung durch die Vermeidung der Leitungsverluste der Dioden wenigstens teilweise zunichtemachen. Wird ein aktiver Gleichrichter vorgesehen, können die Transistoren ebenfalls von der Steuereinheit 9 angesteuert werden, wobei jedoch geeignete Maßnahmen für die Aufrechterhaltung der galvanischen Trennung getroffen werden sollten (beispielsweise Optokoppler).

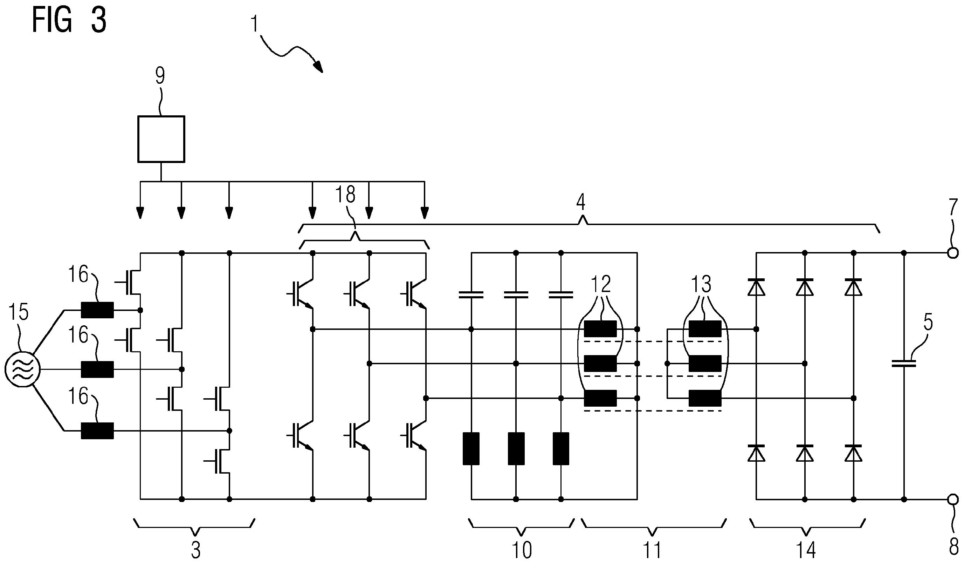

Fig. 3 zeigt ein zweites Ausführungsbeispiel eines erfindungsgemäßen DC-Stellers 1 in einem Schaltbild. Die zum Pulsgenerator 3, dem Resonanzkonverter 4 sowie dessen Haupteinheiten Verteilstufe 18, Resonanztanks 10, Hochfrequenztransformator 11 und Gleichrichter 14 gehörenden Bauteile sind durch geschweifte Klammern angezeigt. Im Ausführungsbeispiel der Fig. 3 ist der Versorgungseingang (hier ohne Bezugszeichen) für ein dreiphasiges Wechselspannungsversorgungsnetz 15 ausgelegt, das mit dem DC-Steller 1 über Netzfilterdrosseln 16 verbunden ist. Die Netzfilterdrosseln 16 haben den Zweck, eine Rückwirkung des geschalteten DC-Stellers 1 auf das Versorgungsnetz zu dämpfen und Energie für die Stromaufnahme durch die nachgeschalteten Stufen zu puffern.

Der Pulsgenerator 3 besitzt für jede Netzphase des Wechselspannungsversorgungsnetzes 15 eine Halbbrücke, über die die Netzphasen des Wechselspannungsversorgungsnetzes 15 zu geeigneten Zeitpunkten durchgeschaltet werden, um Spannungspulse zu erzeugen. Da im gezeigten Ausführungsbeispiel kein Zwischenkreiskondensator vorgesehen ist, der Pulsgenerator also zwischenkreislos ausgeführt ist, stellt sich an der Schnittstelle von Pulsgenerator 3 und Resonanzkonverter 4 keine Gleichspannung ein. Die Einsparung des im Stand der Technik weitverbreiteten Zwischenkreiskondensators führt zu einer Kostenreduktion des DC-Stellers 1, steigert jedoch die regelungstechnischen Anforderungen beim Betrieb des DC-Stellers 1, weil die durch einen Zwischenkreiskondensator regelungstechnisch gegebene Trägheit entfällt. Aufgrund der hohen Anforderungen an die Flankensteilheit der erzeugten Pulse und damit an die Schaltfrequenz der in den Halbbrücken verwendeten Schaltelemente, sind die Halbbrücken im Ausführungsbeispiel der Fig. 3 als SiC-MOSFETs ausgeführt.

Eine Verteilstufe 18 des Resonanzkonverters 4 ist vorliegend ebenfalls aus Halbbrücken aufgebaut, allerdings weisen diese Halbbrücken aus den oben erklärten Gründen vorteilhaft IGBTs auf. Die Verteilstufe 18 verteilt die vom Pulsgenerator 3 erzeugten Spannungspulse auf die drei Resonanztanks 10 des Resonanzkonverters 4, so dass rotierend ein Puls an jeweils einem der Resonanztanks 10 erscheint.

Obgleich vorliegend der Pulsgenerator 3 eingangsseitig mit drei Eingängen für die dreiphasige Versorgungsspannung und der Resonanzkonverter 4 mit drei Resonanztanks 10 ausgestattet ist, müssen diese Anzahlen nicht gleich sein. Die Anzahl der Eingänge richtet sich grundsätzlich nach der Anzahl der Anschlüsse für die Versorgungsspannung, die Anzahl der Resonanztanks 10 des Resonanzkonverters 4 hingegen nach der Anzahl der Primärwicklungen 12 des Hochfrequenztransformators 11.

Der grundsätzliche Aufbau eines Resonanzkonverters 4 wurde bereits anhand von Fig. 2 erläutert. Fig. 3 zeigt eine mögliche schaltungstechnische Umsetzung, wobei vorliegend der Resonanzkonverter 4 im Gegensatz zum Beispiel von Fig. 2 dreiphasig ausgelegt wurde und die Primärseite des Hochfrequenztransformators in Sternschaltung verschaltet ist. Die Resonanztanks 10 bestehen hier aus jeweils einem Kondensator und einer Spule, die zwischen einen jeweiligen Eingang des Resonanzkonverters 4 und einen Sternpunkt geschaltet sind. Ebenfalls zwischen die Eingänge und den Sternpunkt sind die Primärwicklungen 12 des Hochfrequenztransformators 11 geschaltet. Es sind jedoch auch zahlreiche andere Schaltungskonfigurationen möglich, beispielsweise mit einer Dreiecksschaltung.

Der Gleichrichter 14 ist vorliegend als passiver Gleichrichter ausgebildet. Wie bereits erläutert, könnte aber auch ein aktiver Gleichrichter zum Einsatz kommen.

Der Ausgangskondensator 5 ist vorliegend als einzelner Kondensator ausgeführt. Auch hier sind abweichende Konfigurationen möglich, beispielsweise eine Serienschaltung von Kondensatoren, um eine höhere maximale Spannung zwischen Pluspol 7 und Minuspol 8 zu ermöglichen, als es die Durchbruchspannung eines einzelnen Kondensators erlauben würde. Ebenso können als Gleichrichter 14 Schaltungen mit zwei Kondensatoren und einem Mittelabgriff zwischen den zwei Kondensatoren verwendet werden, die einen Wechsel zwischen einer Serien- und einer Parallelschaltung der beiden Kondensatoren und somit ein Umschalten zwischen zwei Betriebsweisen (einfacher Strom bei doppelter Spannung oder doppelter Strom bei einfacher Spannung) erlauben.

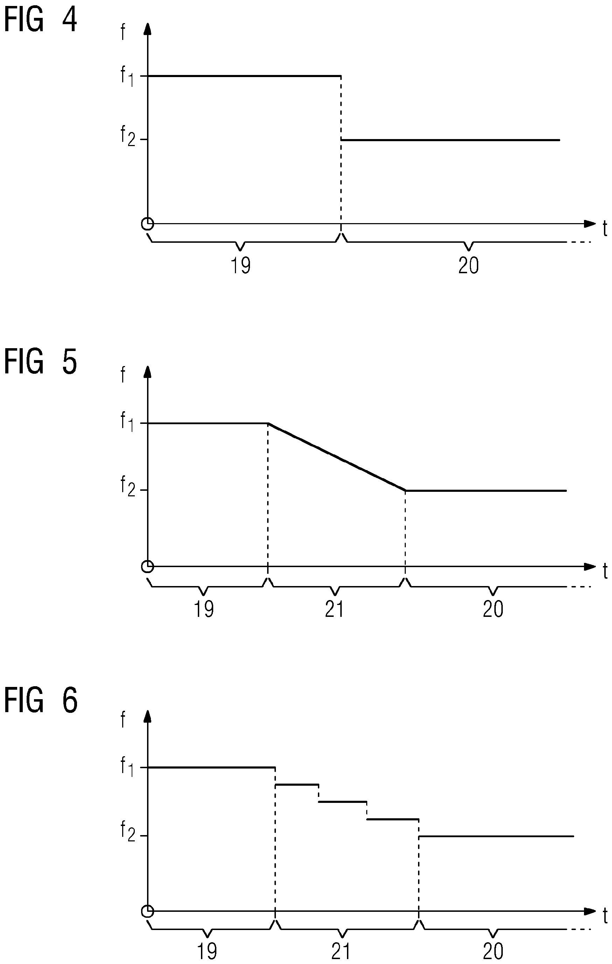

Fig. 4 zeigt ein erstes Ausführungsbeispiel des erfindungsgemäßen Verfahrens anhand eines ersten Diagramms, in dem die Pulsfrequenz f über der Zeit t aufgetragen ist. Auf einen Einschaltzeitpunkt zum Zeitpunkt t=0 folgt unmittelbar eine Initialisierungszeitspanne 19, während der gemäß dem ersten Ausführungsbeispiel des erfindungsgemäßen Verfahrens der Pulsgenerator Pulse mit einer (erhöhten) Frequenz f₁ erzeugt. Die Ansteuerung des Resonanzkonverters 4 mit Pulsen oberhalb von dessen Resonanzfrequenz führt zu einer während der Initialisierungszeitspanne 19 vorteilhaften Senkung des Wirkungsgrads des Resonanzkonverters 4, was zu der erfindungsgemäß angestrebten Begrenzung der Einschaltströme führt. Unmittelbar nach Verstreichen der Initialisierungszeitspanne 19 beginnt eine Dauerbetriebszeitspanne 20, die den gesamten weiteren Betrieb des DC-Stellers 1 bis zu dessen Abschalten dauern kann. Während dieser Dauerbetriebszeitspanne 20 wird der Resonanzkonverter 4 mit Pulsen einer für einen bestmöglichen Wirkungsgrad geeigneten Pulsfrequenz f₂ angeregt, die im Ausführungsbeispiel der Fig. 4 niedriger als die Pulsfrequenz f₂ ist.

Fig. 5 zeigt ein zweites Ausführungsbeispiel des erfindungsgemäßen Verfahrens anhand eines zweiten Diagramms, in dem die Pulsfrequenz f über der Zeit t aufgetragen ist. Im Unterschied zum Ausführungsbeispiel der Fig. 4 wird hier nach Ende der Initialisierungszeitspanne 19 über eine Überleitungszeitspanne 21 hinweg die Pulsfrequenz f kontinuierlich an die Pulsfrequenz f₂ für den Dauerbetrieb des DC-Stellers 1 angenähert, was die oben erläuterten Vorteile hat.

Fig. 6 zeigt ein drittes Ausführungsbeispiel des erfindungsgemäßen Verfahrens anhand eines dritten Diagramms, in dem die Pulsfrequenz f über der Zeit t aufgetragen ist. Auch beim dritten Ausführungsbeispiel des erfindungsgemäßen Verfahrens ist eine Überleitungszeitspanne 21 vorgesehen, wobei hier jedoch die Überleitung von der initialen Pulsfrequenz f₁ zur Pulsfrequenz f₂ für den Dauerbetrieb in mehreren Schritten erfolgt. Dies kann regelungs- und schaltungstechnisch einfacher zu realisieren sein als wie im vorhergehenden Ausführungsbeispiel gezeigt.

Die Erfindung wurde anhand von Abbildungen von Ausführungsbeispielen näher erläutert. Die Erfindung soll dabei jedoch nicht durch die Ausführungsbeispiele beschränkt sein, sondern wird allein durch die nachfolgenden Patentansprüche definiert.

### Bezugszeichenliste

- 1: DC-Steller
- 2: Versorgungseingang
- 3: Pulsgenerator
- 4: Resonanzkonverter
- 5: Ausgangskondensator
- 6: Gleichspannungsausgang
- 7: Pluspol
- 8: Minuspol
- 9: Steuereinheit
- 10, 10-1, 10-2, 10-3, ..., 10-N: Resonanztank
- 11: Hochfrequenztransformator
- 12, 12-1, 12-2, 12-3, ..., 12-N: Primärwicklung
- 13, 13-1, 13-2, 13-3, ..., 13-N: Sekundärwicklung
- 14: Gleichrichter
- 15: Versorgungsnetz
- 16: Netzfilterdrossel
- 18: Verteilstufe
- 19: Initialisierungszeitspanne
- 20: Dauerbetriebszeitspanne
- 21: Überleitungszeitspanne

## Patentansprüche

1. Ein DC-Steller (1) mit einem Versorgungseingang (2) für eine Versorgungsspannung, einem Gleichspannungsausgang (6) für das Bereitstellen einer Gleichspannung, einem eingangsseitig mit dem Versorgungseingang (2) verbundenen Pulsgenerator (3), einem eingangsseitig mit Ausgängen des Pulsgenerators (3) und ausgangsseitig mit dem Gleichspannungsausgang (6) verbundenen Resonanzkonverter (4), einem zwischen einen Pluspol (7) des Gleichspannungsausgangs (6) und einen Minuspol (8) des Gleichspannungsausgangs (6) verbundenen Ausgangskondensator (5) und einer Steuereinheit (9), wobei der Pulsgenerator (3) dazu ausgebildet ist, mit einer von der Steuereinheit (9) veränderlich vorgebbaren Pulsfrequenz (f) Pulse zu erzeugen und an den Resonanzkonverter (4) auszugeben, wobei der Resonanzkonverter (4) eine Mehrzahl N von Resonanztanks (10, 10-1, 10-2, 10-3, ..., 10-N) mit einer Resonanzfrequenz aufweist, **gekennzeichnet dadurch, dass** die Steuereinheit (9) dazu ausgebildet ist, während einer Initialisierungszeitspanne (19) des DC-Stellers (1) dem Pulsgenerator (3) eine erste Pulsfrequenz (f₁) vorzugeben und während einer auf die Initialisierungszeitspanne (19) folgenden Dauerbetriebszeitspanne (20) des DC-Stellers (1) dem Pulsgenerator (3) eine von der ersten Pulsfrequenz (f₁) verschiedene zweite Pulsfrequenz (f₂) vorzugeben, wobei die zweite Pulsfrequenz (f₂) einem N-fachen der Resonanzfrequenz entspricht.

2. Der DC-Steller (1) des vorhergehenden Anspruchs, bei dem die erste Pulsfrequenz (f₁) größer ist als die zweite Pulsfrequenz (f₂).

3. Der DC-Steller (1) eines der vorhergehenden Ansprüche, bei dem sich die erste Pulsfrequenz (f₂) und die zweite Pulsfrequenz (f₂) um wenigstens 30 Prozent voneinander unterscheiden.

4. Der DC-Steller (1) eines der vorhergehenden Ansprüche, bei dem die Resonanzfrequenz zwischen 20 und 70 Kilohertz beträgt.

5. Der DC-Steller (1) eines der vorhergehenden Ansprüche, bei dem die Initialisierungszeitspanne (19) weniger als 120 Mikrosekunden dauert.

6. Der DC-Steller (1) eines der vorhergehenden Ansprüche, bei dem die Initialisierungszeitspanne (19) wenigstens 30 Mikrosekunden dauert.

7. Der DC-Steller (1) eines der vorhergehenden Ansprüche, bei dem die Steuereinheit (9) dazu ausgebildet ist, während einer zwischen der Initialisierungszeitspanne (19) und der Dauerbetriebszeitspanne (20) liegenden Überleitungszeitspanne (21) eine zeitlich veränderliche dritte Pulsfrequenz vorzugeben, die zu Beginn der Überleitungszeitspanne (21) der ersten Pulsfrequenz (f₁) entspricht und zum Ende der Überleitungszeitspanne (21) der zweiten Pulsfrequenz (f₂) entspricht, und dabei eine Differenzfrequenz zwischen der dritten Pulsfrequenz und der zweiten Pulsfrequenz (f₂) über die Überleitungszeitspanne (21) hinweg zu verringern.

8. Der DC-Steller (1) eines der vorhergehenden Ansprüche, bei dem der Pulsgenerator (3) SiC-MOSFET-Transistoren oder GaN-Transistoren aufweist.

9. Der DC-Steller (1) eines der vorhergehenden Ansprüche, bei dem der Resonanzkonverter (4) IGBTs aufweist.

10. Der DC-Steller (1) eines der vorhergehenden Ansprüche, bei dem der Pulsgenerator (3) zwischenkreislos ausgebildet ist.

11. Der DC-Steller (1) eines der vorhergehenden Ansprüche, bei dem der Resonanzkonverter (4) einen N-phasigen Hochfrequenztransformator (11) aufweist, der N Primärwicklungen (12, 12-1, 12-2, 12-3, ..., 12-N) besitzt, die jede mit einem jeweiligen der N Resonanztanks (10, 10-1, 10-2, 10-3, ..., 10-N) verbunden sind.

12. Ein Verfahren zum Betreiben eines DC-Stellers (1) mit einem Versorgungseingang (2) für eine Versorgungsspannung, einem Gleichspannungsausgang (6) für das Bereitstellen einer Gleichspannung, einem eingangsseitig mit dem Versorgungseingang (2) verbundenen Pulsgenerator (3), einem eingangsseitig mit Ausgängen des Pulsgenerators (3) und ausgangsseitig mit dem Gleichspannungsausgang (6) verbundenen Resonanzkonverter (4) und einem zwischen einen Pluspol (7) des Gleichspannungsausgangs (6) und einen Minuspol (8) des Gleichspannungsausgangs (6) verbundenen Ausgangskondensator (5), wobei der Pulsgenerator (3) dazu ausgebildet ist, mit einer veränderlichen Pulsfrequenz Pulse zu erzeugen und an den Resonanzkonverter (4) auszugeben, wobei der Resonanzkonverter (4) eine Mehrzahl N von Resonanztanks (10, 10-1, 10-2, 10-3, ..., 10-N) mit einer Resonanzfrequenz aufweist, **gekennzeichnet dadurch, dass** der Pulsgenerator (3) während einer Initialisierungszeitspanne (19) des DC-Stellers (1) Pulse mit einer ersten Pulsfrequenz (f₁) erzeugt und während einer auf die Initialisierungszeitspanne (19) folgenden Dauerbetriebszeitspanne (20) des DC-Stellers (1) Pulse mit einer von der ersten Pulsfrequenz (f₁) verschiedenen zweiten Pulsfrequenz (f₂) erzeugt, wobei die zweite Pulsfrequenz (f₂) einem N-fachen der Resonanzfrequenz entspricht.

13. Das Verfahren des vorhergehenden Anspruchs, bei dem die erste Pulsfrequenz (f₁) größer ist als die zweite Pulsfrequenz (f₂).

14. Das Verfahren eines der Ansprüche 12 oder 13, bei dem sich die erste Pulsfrequenz (f₂) und die zweite Pulsfrequenz (f₂) um wenigstens 30 Prozent voneinander unterscheiden.

15. Das Verfahren eines der Ansprüche 12 bis 14, bei dem der Pulsgenerator (3) während einer zwischen der Initialisierungszeitspanne (19) und der Dauerbetriebszeitspanne (20) liegenden Überleitungszeitspanne (21) Pulse mit einer zeitlich veränderlichen dritten Pulsfrequenz erzeugt, die zu Beginn der Überleitungszeitspanne (21) der ersten Pulsfrequenz (f₁) entspricht und zum Ende der Überleitungszeitspanne (21) der zweiten Pulsfrequenz (f₂) entspricht, und dabei eine Differenzfrequenz zwischen der dritten Pulsfrequenz und der zweiten Pulsfrequenz (f₂) über die Überleitungszeitspanne (21) hinweg verringert.
